# EUROPEAN PATENT SPECIFICATION

(11) **EP 2 060 348 B1**
(45) Date of publication and mention of the grant of the patent: **16.02.2011**
(21) Application number: 08019908.6
(22) Date of filing: 14.11.2008
(51) Int. Cl.: B23B 31/30, B25B 11/00

(54) **Vacuum grip for CNC machines and tool holder comprising a vacuum grip**
Vakuumgriff für CNC-Maschinen und Werkzeughalter mit einem Vakuumgriff
Poignée à vide pour machines CNC et support d'outil comportant une poignée à vide

(30) Priority: 14.11.2007 DK 200701624
(43) Date of publication of application: 20.05.2009
(73) Proprietor: Schunk GmbH & Co. KG Spann- und Greiftechnik, 74348 Lauffen am Neckar (DE)
(72) Inventor: Gothe, Andree, 7700 Thisted (DK)
(74) Representative: Dreiss

(56) References cited:
- EP-A- 1 088 624
- DE-U1- 29 911 289
- US-A1- 2003 141 673

## Description

The present invention is directed to tool holder and vacuum grip for holding workpieces.

From US 2003/141673 A1 a rotary vacuum-chuck is known which may hold a substrate for rotation. From EP 1 088 624 A2 a vacuum cup with precision hard stop is known.

From DE 299 11 289 U1, which corresponds to the preamble of claim 1, a vacuum mounting for lathes or milling machines is known, but not for CNC machines.

From EP.l 088 624 A2 a vacuum cup with a precision hard stop is known.

CNC machines are typically computer controlled, grinding, sawing, cutting, drilling or other working machines which have one or more operations to complete on a work piece arranged in the machine's working area. After ending the specific task controlled by the computer the work piece must be moved away from the working zone and a new work piece placed, such that the computer controlled operations may be carried out on the new work piece.

The placement and removal of the work pieces may be carried out in a number of ways for example by means of robots, manually or by systems involving gravity driven magazines. However, all these systems are rather costly, take up some working space around the CNC machine and are not easy to adapt to different types of work pieces.

It is therefore an object of the present invention to alleviate the problems with the prior art devices and provide a simple and easily adaptable holder for work pieces.

The present invention addresses this by providing a tool holder and vacuum grip for holding workpieces with the features of claim 1.

In this manner by using the existing tool holder by simply realising the grip in the tool holder no extra machinery, robots or the like are necessary in order to fixate the work piece in the working station while the CNC machine carries out its computer controlled tasks. Traditionally CNC machines are provided with more tool holders such that by occupying one tool holder with a replaceable grip the normal working routine of the CNC machine is not hampered in any way. Furthermore, the grip is a relatively cheap tool and may be replaced according to circumstances and in particular according to the work pieces which are to be treated in the CNC machine. The suction cup will together with the source of vacuum provide the fixation needed in order to maintain the work piece in a fixed relationship in relation to tools such that the required operations may be carried out in a precise and reliable manner.

In a further advantageous embodiment of the invention the first end, when mounted in the tool holder, is in air tight connection with the tool holder's compressed air supply, such that a second channel in the main body is supplied with compressed air, and where the vacuum generator is of the Venturi type, created by said first channel connecting the suction cup to the second channel, where said second channel is provided with an outlet downstream of the connection point.

The provision of a Venturi type device inside the grip in order to create the vacuum is advantageous due to the fact that tool holders in the majority of CNC machines are provided with a supply of compressed air. It is therefore not necessary to build any additional systems onto the machine in order to provide the vacuum source, and at the same time the venturi type construction creates sufficient vacuum in the second channel such that an effective suction may be provided in the suction cup, sufficient for maintaining the work pieces in a firm grip in relation to the grip inserted in the tool holder.

In this connection the venturi effect used in the vacuum generator is well-known and widely described as an example of application of Bernoulli's principle which may be further explored in any text book relating to fluid flows.

In a further advantageous embodiment the suction cup has different sizes, dimensions and resilient properties depending on the application. It is possible to provide two or more suction cups in the grip in cases where long, elongated objects such as rods or the like are to be held in the work station and for other purposes large diameter suction cups may be installed in order to hold sheet materials in the work station. The materials as well as the resilient properties etc. may be freely chosen by a skilled person such that the suction cup is adapted to that particular application and by application is meant the type of work piece to be treated and the task to be performed.

In a further advantageous embodiment the first and second channels are dimensioned such that the first channel has a smaller cross-sectional area than the second channel which embodiment also may be construed as a further embodiment where the first and second channels are dimensioned such that the first channel has a larger cross-sectional area than the second channel. The relative dimensions between the channels, i.e. the first and second channels, in the grip may be dimensioned such that the resulting vacuum, that is to say the suction cup's ability to engage work pieces may be adjusted simply by choosing grips having different cross sectional areas of the first and second channels. As the air flows in the channels are ruled by basic physical principles such as for example Bernoulli's principle, it will be possible for a skilled person to calculate the vacuum, i.e. the under-pressure present in the second channel such that it will be suitable for the task at hand. Generally, the present invention relying on a simple principle provides for a substantially maintenance free device which may be expected to have a long service free life expectancy as there are no moving parts, no fragile materials, corrosive hydraulics or electronics involved etc.

In one embodiment the first channel may be provided with a channel restrictor such that the amount of air being forced through the first channel by the CNC machine's source of compressed air may be delimited in order not to provide too strong an under-pressure in the second channel.

The fastening of the grip in the tool holder may designed in the same manner as the way the tools are designed to be held in the tool holder.

According to the invention, it is also possible that the main body and the suction cup is made of one piece. That means, that the main body is made of the same material then the suction cup. For example, the hole vacuum grip can be made of plastic.

Also according to the invention the main body and the suction cup could be made of different pieces. An advantage is, when the suction cup is removable and/or exchangeable from the main body. According to the task of the gripper, a especially designed suction cup can be applied.

The invention also is directed to a tool holder for a CNC machine with an interface for an automatic tool system, which comprises a grip according to the invention. Such a tool holder builds one units with the vacuum grip.

Also in this case it is advantageous, if the suction cup is removable and/or exchangeable.

The tool holder can comprise a cavity for accommodation of the first end of the main body of the grip. In this case, the grip can be moved into the cavity and can be held by the tool holder.

According to the invention the tool holder can be configured in that way, that the tool holder and the main body is made of one piece. In this case the tool holder and the main body is made of the same material. The tool holder and the main body can be produced together in one single process.

The tool holder can be provided with a channel having an outlet, whereby the first channel of the main body is connected in one end to the suction cup and in the other end to this channel. Especially in the case, when the tool holder and the main body is made of one piece, there are only two channels provided in the tool holder. One is the first channel coming from the suction cup. The other one is the second channel in which pressurized air can be introduced.

In the case, where the main body and the tool holder are two different pieces, the channel, in which pressurized air can be lead, can be divided into two parts; a first part being located in the tool holder and a second part being located in the main body. The first channel then leads from the suction cup to the second part of this channel.

The present invention will now be explained with reference to the accompanying drawings wherein
figure 1 illustrates a first embodiment with an external source of vacuum and;
figure 2 illustrates a second embodiment with an internal source of vacuum.

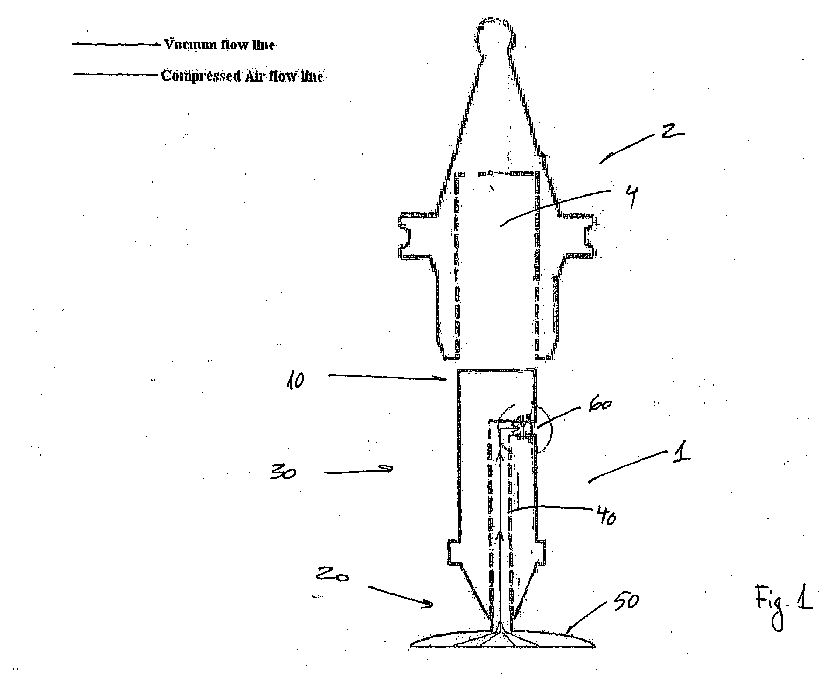

Turning to figure 1 the invention is directed to a grip generally indicated by 1 where the grip 1 comprises a main body 30 which main body has a first end 10 and a second end 20. The first end 10 is adapted to be arranged in a cavity 4 in a tool holder 2. The tool holder is a standard part of a CNC machine and may according to the make of the CNC machine have a different configuration, that means it may comprise different interfaces for automatic tooling systems, as the one illustrated. This is the reason why the first end 10 of the grip 1 is described as being adaptable to the cavity 4 in a tool holder 2 in that the shape of the first end 10 of the present invention is inconsequential to the performance of the invention. The main body 30 is provided with a first channel 40 which first channel in one end is attached to a suction cup 50 and in the opposite end may be connected by the outlet 60 to a vacuum source. In this manner the suction cup 50 may be exposed to an under-pressure (vacuum) such that work pieces placed adjacent the suction cup may be firmly held by the suction cup arranged in the main body 30 of the grip 1 which in turn is arranged in the cavity 4 of the tool holder 2 such that altogether a very firm hold on the work piece (not illustrated) is achieved.

By regulating the under-pressure generated by the not illustrated vacuum source connected to the connection point 60 and selecting the size of the suction cup 50 a wide variety of work pieces may be firmly held by the grip 1 according to the present invention.

As shown in figure 1, the grip 1 and the tool holder 2 are made of two different parts. Instead of this, the tool holder 2 and the main body 30 could be also made of one single piece.

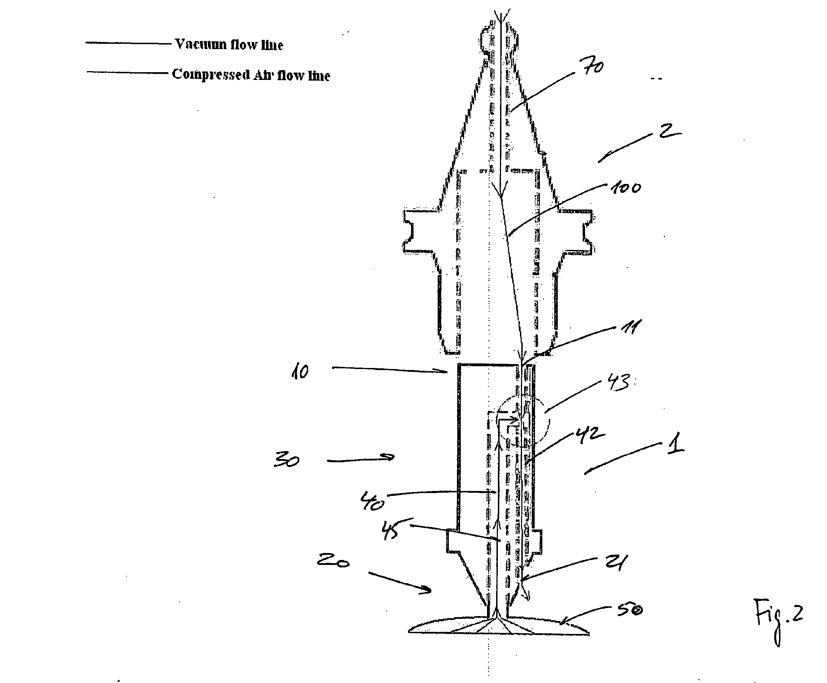

Turning to figure 2 a further preferred embodiment of the invention is illustrated. The grip 1 again has first and second ends 10, 20 and a main body 30.

The grip is mounted in the tool holder 2 in the same manner as described above with reference to figure 1.

In this embodiment, however, the tool holder 2 is provided with a channel 70 which again is connected to a source of pressurized air such that pressurized air indicated by arrow 100 may be introduced into a second channel 42 arranged from the first end 10 to the second end 20 in the main body 30. The second channel 42 is thereby provided with an inlet 11 and an outlet 21. The first channel 40 connected in one end to the suction cup 50 is in the other end connected with the second channel 42 in the connection point 43. In this manner a Venturi is created such that the pressurized air 100 flowing through the second channel 42 due to Bernoulli's principle will create a vacuum illustrated by the arrow 45 in the first channel 40. The under-pressure created at the connection point 43 will create the air flow indicated by the arrow 45 which will provide for suction in the suction cup 50.

As shown in figure 2, the tool holder 2 and the grip 1 are made of two different pieces. Instead of this, the tool holder 2 and the main body 10 of the grip 1 could be made of one single piece.

In this manner a very simple, yet very reliable grip is constructed for gripping work pieces in a CNC machine.

Within this application vacuum has been used in the meaning under-pressure, as it is acknowledged that the scientific term or interpretation of vacuum is not present. The meaning of vacuum is in the more general understanding of underpressure.

## Claims

1. Tool holder (2) and vacuum grip (1) for holding workpieces **characterised in that** the tool holder (2) f is adapted for a CNC machine and comprises an interface for an automatic tooling system,
where said grip (1) comprises a main body (30), said main body (30) having a first end (10) and a second end (20),
where the first end (10) is adapted to be mounted in a cavity (4) of a tool holder or where the tool holder (2) and the main body (30) is made of one piece,
where the second end (20) is provided with a resilient suction cup (50), and
where a vacuum generator is connected to a first channel (40) arranged inside the main body (30) which is connected to the suction cup (50).

2. Tool holder (2) and vacuum grip (1) according to claim 1, wherein the first end (10), when mounted in the cavity is in air tight connection with the tool holder's compressed air supply, such that a second channel (42) in the main body (30) is supplied with compressed air, and where the vacuum generator is of the venturi type, created by said first channel (40) connecting the suction cup (50) to the second channel (42), where said second channel (42) is provided with an outlet (21) downstream of the connection point (43).

3. Tool holder (2) and vacuum grip (1) according to claim 1 or 2 wherein the suction cup (50) has different sizes, dimensions and resilient properties depending on the application.

4. Tool holder (2) and vacuum grip (1) according to claim 2 wherein the first and second channels (40 and 42) are dimensioned such that the first channel (40) has a smaller cross-sectional area than the second channel (42).

5. Tool holder (2) and vacuum grip (1) according to claim 2 wherein the first and second channels (40 and 42) are dimensioned such that the first channel (40) has a larger cross-sectional area than the second channel (42).

6. Tool holder (2) and vacuum grip (1) according to one of the previous claims, wherein the main body (30) and the suction cup (50) is made of one piece.

7. Tool holder (2) and vacuum grip (1) according to one of the claims 1 to 6, wherein the main body (30) and the suction cup (50) is made of different pieces.

8. Tool holder (2) and vacuum grip (1) according to calm 7, wherein the suction cup (50) is removable and/or exchangeable from the main body (30).

9. Tool holder (2) and vacuum grip (1) according to one of the previous claims, provided with a channel (70) having an outlet (21), whereby the first channel (40) is connected in one end to the suction cup (50) and in the other end with the this channel (70).

10. Too holder (2) and vacuum grip (1) according to claim 9, whereby the channel (70) is divided into two parts, a first part (70) being located in the tool holder a second part (42) being located in the main body (10).

## Patentansprüche

1. Werkzeughalter (2) und Vakuumgreifer (1) zum Halten von Werkstücken, **dadurch gekennzeichnet, dass** der Werkzeughalter (2) an eine CNC-Maschine angepasst ist und eine Schnittstelle für ein automatisches Werkzeugsystem umfasst,
wobei der Greifer (1) einen Hauptkörper (30) mit einem ersten Ende (10) und einem zweiten Ende (20) umfasst, wobei das erste Ende (10) so angepasst ist, dass es in einem Hohlraum (4) eines Werkzeughalters montiert werden kann oder der Werkzeughalter (2) und der Hauptteil (30) einstückig sind,
wobei das zweite Ende (20) mit einem federnden Saugnapf (50) versehen ist und
wobei ein Vakuumerzeuger mit einem ersten Kanal (40) verbunden ist, der innerhalb des Hauptteils (30) angeordnet ist und mit dem Saugnapf (50) verbunden ist.

2. Werkzeughalter (2) und Vakuumgreifer (1) nach Anspruch 1, wobei das erste Ende (10), wenn es im Hohlraum (4) montiert ist, luftdicht mit dem Druckluftanschluss des Werkzeughalters verbunden ist, sodass ein zweiter Kanal (42) im Hauptteil (30) mit Druckluft versorgt wird und wobei der Vakuumerzeuger vom Typ einer Venturi-Düse ist, die **dadurch** entsteht, dass der erste Kanal (40) den Saugnapf (50) mit dem zweiten Kanal (42) verbindet und wobei der zweite Kanal (42) mit einem Ausgang (21) stromabwärts des Verbindungspunktes (43) versehen ist.

3. Werkzeughalter (2) und Vakuumgreifer (1) nach Anspruch 1 oder 2, wobei der Saugnapf (50) je nach Anwendungsgebiet verschiedene Größen, Abmessungen und federnde Eigenschaften aufweist.

4. Werkzeughalter (2) und Vakuumgreifer (1) nach Anspruch 2, wobei der erste (40) und der zweite Kanal (42) so dimensioniert sind, dass der erste Kanal (40) eine kleinere Querschnittsfläche aufweist als der zweite Kanal (42).

5. Werkzeughalter (2) und Vakuumgreifer (1) nach Anspruch 2, wobei der erste (40) und der zweite Kanal (42) so dimensioniert sind, dass der erste Kanal (40) eine größere Querschnittsfläche als der zweite Kanal (42) aufweist.

6. Werkzeughalter (2) und Vakuumgreifer (1) nach einem der vorhergehenden Ansprüche, wobei der Hauptteil (30) und der Saugnapf (50) einstückig sind.

7. Werkzeughalter (2) und Vakuumgreifer (1) nach einem der Ansprüche 1 bis 6, wobei der Hauptteil (30) und der Saugnapf (50) aus unterschiedlichen Einzelteilen bestehen.

8. Werkzeughalter (2) und Vakuumgreifer (1) nach Anspruch 7, wobei der Saugnapf (50) abnehmbar und/oder austauschbar vom Hauptteil (30) ist.

9. Werkzeughalter (2) und Vakuumgreifer (1) nach einem der vorhergehenden Ansprüche, wobei der Werkzeughalter (2) mit einem Kanal (70) versehen ist, der über einen Ausgang (21) verfügt, wobei erste Kanal (40) an einem Ende mit dem Saugnapf (50) verbunden ist und am anderen Ende mit diesem Kanal (70).

10. Werkzeughalter (2) und Vakuumgreifer (1) nach Anspruch 9, wobei der Kanal 70 in zwei Teile aufgeteilt ist, einen ersten Teil (70), der sich im Werkzeughalter befindet und einen zweiten Teil (42), der sich im Hauptteil (30) befindet.

## Revendications

1. Porte-outil (2) et système de préhension à vide (1) pour tenir des pièces, **caractérisés en ce que** le porte-outil (2) est adapté pour une machine à commande numérique et comprend une interface pour un système d'outillage automatique,
ledit système de préhension (1) comprenant un corps principal (30), ledit corps principal (30) ayant une première extrémité (10) et une seconde extrémité (20),
la première extrémité (10) étant apte à être montée dans une cavité (4) d'un porte-outil, ou le porte-outil (2) et le corps principal (30) étant réalisés d'un seul tenant, la seconde extrémité (20) étant pourvue d'une ventouse (50) élastique, et
un générateur de vide étant raccordé à un premier conduit (40) agencé à l'intérieur du corps principal (30) qui est raccordé à la ventouse (50).

2. Porte-outil (2) et système de préhension à vide (1) selon la revendication 1, **caractérisés en ce que** la première extrémité (10), quand elle est montée dans la cavité, est en liaison hermétique avec l'alimentation d'air comprimé du porte-outil, de sorte qu'un second conduit (42) dans le corps principal (30) est alimenté en air comprimé, et **en ce que** le générateur de vide est de type venturi, créé par ledit premier conduit (40) raccordant la ventouse (50) au second conduit (42), ledit second conduit (42) étant pourvu d'une sortie (21) en aval du point de raccordement (43).

3. Porte-outil (2) et système de préhension à vide (1) selon la revendication 1 ou 2, **caractérisés en ce que** la ventouse (50) a des tailles, des dimensions et des propriétés d'élasticité différentes en fonction de l'application.

4. Porte-outil (2) et système de préhension à vide (1) selon la revendication 2, **caractérisés en ce que** les premier et second conduits (40 et 42) sont dimensionnés de telle sorte que le premier conduit (40) a une section transversale plus petite que le second conduit (42).

5. Porte-outil (2) et système de préhension à vide (1) selon la revendication 2, **caractérisés en ce que** les premier et second conduits (40 et 42) sont dimensionnés de telle sorte que le premier conduit (40) a une section transversale plus grande que le second conduit (42).

6. Porte-outil (2) et système de préhension à vide (1) selon l'une des revendications précédentes, **caractérisés en ce que** le corps principal (30) et la ventouse (50) sont réalisés d'un seul tenant.

7. Porte-outil (2) et système de préhension à vide (1) selon l'une des revendications 1 à 6, **caractérisés en ce que** le corps principal (30) et la ventouse (50) sont réalisés en plusieurs pièces.

8. Porte-outil (2) et système de préhension à vide (1) selon la revendication 7, **caractérisés en ce que** la ventouse (50) est amovible et/ou échangeable à partir du corps principal (30).

9. Porte-outil (2) et système de préhension à vide (1) selon l'une des revendications précédentes, pourvus d'un conduit (70) ayant une sortie (21), moyennant quoi le premier conduit (40) est raccordé à une extrémité à la ventouse (50) et à l'autre extrémité audit conduit (70).

10. Porte-outil (2) et système de préhension à vide (1) selon la revendication 9, **caractérisés en ce que** le conduit (70) est divisé en deux parties, une première partie (70) étant située dans le porte-outil, une second partie étant située dans le corps principal (10).
